# EUROPÄISCHE PATENTSCHRIFT

(11) **EP 1 826 470 B1**
(45) Veröffentlichungstag und Bekanntmachung des Hinweises auf die Patenterteilung: **22.10.2008**
(21) Anmeldenummer: 06110337.0
(22) Anmeldetag: 23.02.2006
(51) Int. Cl.: F16L 37/088

(54) **Anschlussteil für pneumatische oder hydraulische Aggregate**
Connection for a pneumatic or hydraulic machine component
Connecteur pour un système pneumatique ou hydraulique

(43) Veröffentlichungstag der Anmeldung: 29.08.2007
(73) Patentinhaber: Voss Automotive GmbH, 51688 Wipperfürth (DE)
(72) Erfinder: Offermann, Olaf, 51688 Wipperfürth (DE)
(74) Vertreter: Patentanwälte Dr. Solf & Zapf

(56) Entgegenhaltungen:
- DE-C1- 19 940 387
- FR-A- 2 775 330
- US-A- 5 354 103
- US-A- 5 992 894
- US-A- 6 027 143
- US-B1- 6 231 084

## Beschreibung

Die vorliegende Erfindung betrifft ein Anschlussteil für eine pneumatische oder hydraulische Aggregatkomponente, mit den Merkmalen des Oberbegriffs des Anspruchs 1.

Ein solches Anschlussteil kann für praktisch beliebige Druckmittel-Aggregate ausgelegt sein, zum Beispiel für hydraulische oder pneumatische Pumpen, Speicher und Tanks sowie beispielsweise für pneumatische Federn. Dabei besteht häufig der Druckmittelanschluss aus einer Schraub- oder Steckverbindung.

Ein solches, dem Oberbegriff des Anspruchs 1 entsprechendes Anschlussteil ist in dem Dokument US 5 354 103 beschrieben. Konkret handelt es sich um ein Anschlussteil mit zwei Aufnahmeöffnungen für je einen Anschlussstecker. Jede Aufnahmeöffnung weist einen Dichtabschnitt zur Anlage einer Stecker-Umfangsdichtung auf. Weiterhin ist den Aufnahmeöffnungen als Stecker-Verriegelungsmittel ein einzelnes, gemeinsames Mehrfach-Verriegelungselement zugeordnet. Dieses Verriegelungselement besteht aus zwei spiegelsymmetrischen Hälften, so dass jeder Stecker unabhängig von der Verriegelung eines gegebenenfalls zuvor eingesteckten Anschlusssteckers steckbar und verriegelbar ist. Hierbei wird das Verriegelungselement vor dem Mündungsbereich der Aufnahmeöffnungen über ein zusätzliches Halteteil befestigt. Dieses Halteteil weist eine Vertiefung zur Aufnahme des Verriegelungselementes auf und wird mittels einer Schraube unter Einschluss des Verriegelungselementes an dem Gehäuseteil befestigt. Aufgrund der beschriebenen Ausgestaltung kann zwar jeder Anschlussstecker einzeln gesteckt und verriegelt werden, allerdings ist ein späteres Lösen der/des Stecker/s umständlich, weil dazu die Befestigungsschraube gelöst und das Halteteil demontiert werden muss. Dazu ist in jedem Fall ein spezielles Werkzeug (Schraubenschlüssel) erforderlich.

Die US 5 992 894 beschreibt ein anderes Anschlussprinzip. Es handelt sich nicht um eine Steckverbindung im eigentlichen Sinne, bei der jeder einzelne Anschlussstecker unabhängig vom dem anderen einsteckbar und verriegelbar wäre. Vielmehr handelt es sich um das Prinzip eines so genannten Blockverbinders, wobei die Anschlussstecker zunächst seitlich, in Querrichtung in Schlitzöffnungen einer Halteplatte eingeführt werden. Die Halteplatte wird dann zusammen mit den Steckern mit dem Anschlussteil zusammengefügt. Die Befestigung erfolgt über Schrauben. Somit ist auch hier ein Lösen der/des Stecker/s umständlich.

Das Dokument DE 199 40 387 C1 beschreibt einen Leckageanschluss, bei dem es sich aber lediglich um einen Einfach-Anschluss mit nur einer Aufnahmeöffnung für einen Anschlussstecker handelt.

Der vorliegenden Erfindung liegt die Aufgabe zugrunde, ein Anschlussteil der genannten Art so zu verbessern, dass der/jeder eingesteckte und verriegelte Stecker bei Bedarf einfach, schnell und insbesondere ohne spezielles Werkzeug lösbar ist.

Erfindungsgemäß wird dies durch die Merkmale des Anspruchs 1 erreicht. Vorteilhafte Ausgestaltungsmerkmale der Erfindung sind in den abhängigen Ansprüchen enthalten.

Das Gehäuseteil weist (mindestens) zwei Aufnahmeöffnungen für je einen Anschlussstecker auf, wobei die Aufnahmeöffnungen mit zueinander parallelen Öffnungsachsen benachbart nebeneinander angeordnet sind. Dabei ist den Aufnahmeöffnungen ein einzelnes, gemeinsames Mehrfach-Verriegelungselement zum lösbaren Verriegeln jedes der eingesteckten Anschlussstecker zugeordnet. Dadurch können zunächst auf einfache Weise mindestens zwei Stecker mit zugehörigen Leitungen angeschlossen werden. Jeder Stecker wird durch das gemeinsame Mehrfach-Verriegelungselement verriegelt. Daraus resultiert eine sehr einfache Anschluss-Steckverbindung. Indem die Aufnahmeöffnungen wahlweise miteinander verbunden sein oder voneinander getrennt in separate Kanäle oder Innenräume münden können, wird eine große Vielfalt von Anschlussmöglichkeiten erreicht.

Das Gehäuseteil ist bevorzugt als einstückiges Formteil gebildet. Dabei weist jede Aufnahmeöffnung einen Dichtabschnitt mit einer zylindrischen oder leicht konischen Innenfläche zur direkten Anlage einer Umfangsdichtung des Anschlusssteckers und einen Halteabschnitt für das Verriegelungselement zum lösbaren Verriegeln des eingesteckten Anschlusssteckers auf. Das Gehäuseteil kann durch die erfindungsgemäße Ausgestaltung als einstückiges Formteil auf einfache und wirtschaftliche Weise in einem Spritzverfahren hergestellt werden. Dabei können die Aufnahmeöffnungen unmittelbar eingeformt werden. Es sind keine zusätzlichen Bearbeitungen und/oder Übergangselemente erforderlich, sondern der Anschlussstecker kann unmittelbar in die jeweilige Aufnahmeöffnung eingesteckt werden, wobei auch die Mittel zur lösbaren Verriegelung in dem Gehäuseteil integriert sind. Die Umfangsdichtung des Anschlusssteckers dichtet direkt den Ringspalt zwischen dem Stecker und der Aufnahmeöffnung ab, was zu einer optimalen Dichtwirkung führt.

Weitere vorteilhafte Einzelheiten der Erfindung sind in der anschließenden Beschreibung noch genauer erläutert.

An Hand eines in der Zeichnung veranschaulichten, bevorzugten Ausführungsbeispiels soll die Erfindung näher erläutert werden. Dabei zeigen:
- Fig. 1: ein erfindungsgemäßes Anschlussteil in einer Draufsicht auf die Seite des Druckmittelanschlusses in einer bevorzugten Ausführung als Doppelanschluss,
- Fig. 2: eine Teil-Seitenansicht in Pfeilrichtung II gemäß Fig. 1,
- Fig. 3: einen Teilschnitt in der Ebene III - III gemäß Fig. 1,
- Fig. 4: eine gesonderte, halb-axial geschnittene Seitenansicht eines Anschlusssteckers in zum Einstecken lagerrichtiger Relation zu Fig. 3,
- Fig. 5: eine vergrößerte Schnittansicht gemäß der Schnittebene V-V in Fig. 3,
- Fig. 6: eine perspektivische, teilweise aufgeschnittene Ansicht des Anschlussbereichs des erfindungsgemäßen Anschlussteils und
- Fig. 7: eine gesonderte Ansicht eines Verriegelungselementes in einer bevorzugten Ausgestaltung (gegenüber Fig. 5 verkleinert)

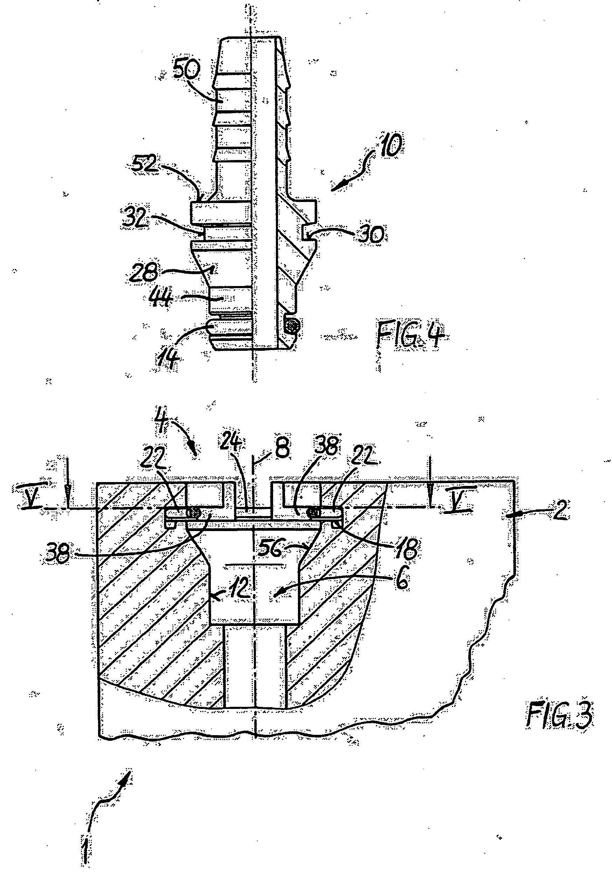

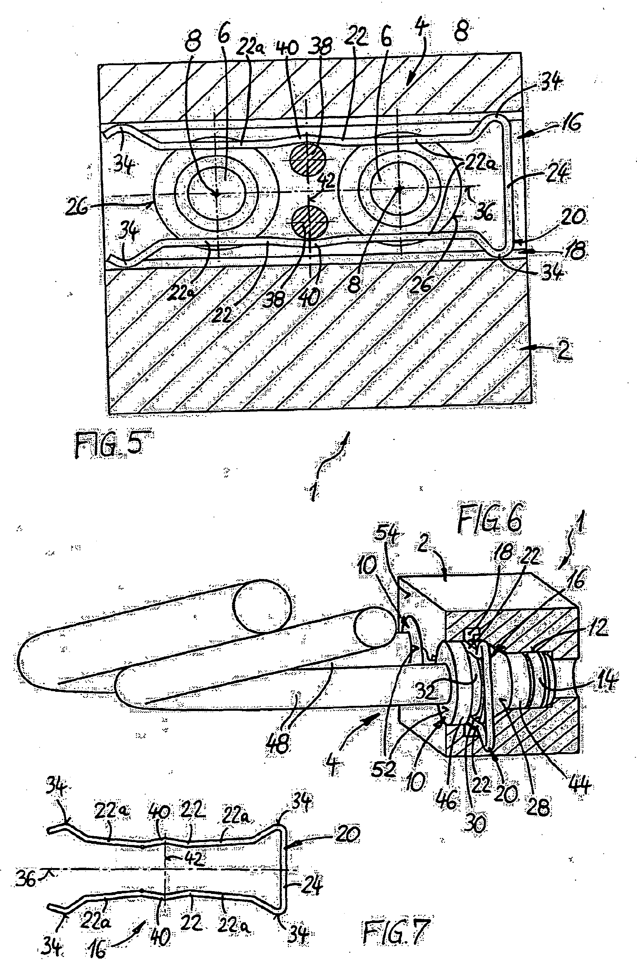

Ein erfindungsgemäßes Anschlussteil 1 besteht aus einem Gehäuseteil 2, welches bevorzugt als einstückiges, monolithisches Formteil ausgebildet ist. Ein Druckmittelanschluss 4 besteht aus (mindestens) zwei insbesondere gleichartigen Aufnahmeöffnungen 6 des Gehäuseteils 2, die mit zueinander parallelen Öffnungsachsen 8 benachbart nebeneinander angeordnet sind. Jede Aufnahmeöffnung 6 kann frei nach innen in einen gemeinsamen oder in je einen separaten Innenraum des Gehäuseteils 2 münden oder in voneinander getrennte oder miteinander verbundene Kanäle übergehen. In jede Aufnahmeöffnung 6 kann ein Anschlussstecker 10 (nur in Fig. 4 und 6 dargestellt) direkt eingesteckt werden. Dazu weist jede Aufnahmeöffnung 6 einen Dichtabschnitt mit einer bevorzugt zylindrischen oder eventuell leicht konischen Innenfläche 12 zur Auflage einer Umfangsdichtung 14 des Anschlusssteckers 10 (siehe Fig. 4 und 6) und einen Halteabschnitt mit Verriegelungsmitteln zum lösbaren Verriegeln des eingesteckten Anschlusssteckers 10 auf (siehe hierzu insbesondere Fig. 6). Der Halteabschnitt mit den Verriegelungsmitteln ist der Einsteckseite des Dichtabschnittes vorgeordnet.

Erfindungsgemäß ist als Verriegelungsmittel ein Mehrfach-Verriegelungselement 16 derart ausgebildet und gelagert, dass es allen Aufnahmeöffnungen 6 zum lösbaren Verriegeln jedes der zugehörigen Anschlussstecker 10 zugeordnet ist. Dabei ist es wesentlich, dass das Mehrfach-Verriegelungselement 16 derart ausgebildet und gelagert ist, dass es im Bereich jeder Aufnahmeöffnung 6 im Wesentlichen gleichartige Funktionseigenschaften zum Verriegeln des jeweiligen Anschlusssteckers 10 besitzt.

Weiterhin ist es wesentlich, dass das Verriegelungselement 16 derart ausgebildet und im Bereich der Aufnahmeöffnungen 6 gelagert ist, dass jeder Anschlussstecker 10 unabhängig von der Verriegelung eines gegebenenfalls zuvor gesteckten Anschlusssteckers 10 steckbar und verriegelbar ist. Dies bedeutet, dass beim Stecken eines zweiten Anschlusssteckers 10 gewährleistet ist, dass der zuvor gesteckte erste Anschlussstecker 10 verriegelt bleibt und nicht etwa durch den Steckvorgang des zweiten Anschlusssteckers 10 gelöst wird. Für ein gewolltes Lösen aller Anschlussstecker 10 gemeinsam ist das Verriegelungselement 16 auf einfache Weise demontierbar.

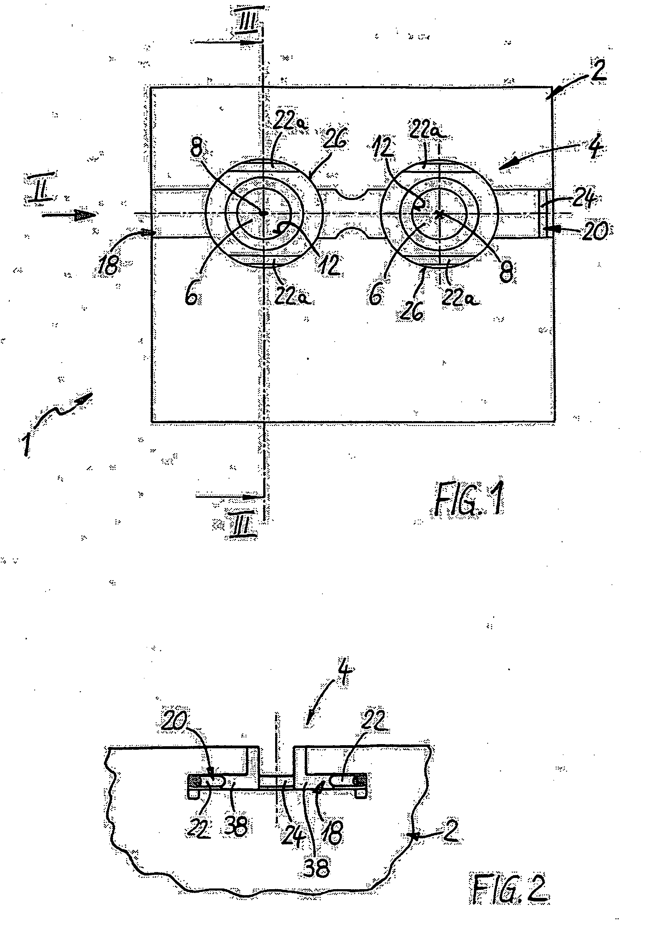

Hierzu ist in der dargestellten Ausführung vorgesehen, dass die Halteabschnitte der Aufnahmeöffnungen 6 eine quer zu den Öffnungsachsen 8 ineinander übergehende Schlitzöffnung 18 zur Aufnahme des Verriegelungselementes 16 bilden. Dabei ist das Verriegelungselement 16 als einteilige, im Wesentlichen U-förmige Federklammer 20 ausgebildet (siehe insbesondere die gesonderte Darstellung in Fig. 7). Diese Federklammer 20 weist zwei federelastische Verriegelungsschenkel 22 auf, die über einen Verbindungsabschnitt 24 verbunden sind. Die Verriegelungsschenkel 22 sind derart lang ausgebildet, dass sie sich über die Bereiche aller (beider) Aufnahmeöffnungen 6 erstrecken und dabei mit etwa geradlinigen Teilabschnitten 22 a jeweils sekantenartig zu einem Stecker-Einführquerschnitt (siehe in Fig. 1 und 5 die mit 26 bezeichneten Kreise) der jeweiligen Aufnahmeöffnung 6 angeordnet sind. Die Federklammer 20 kann auf einfache Weise montiert und demontiert werden, indem sie in die Schlitzöffnung 18 eingeschoben bzw. herausgezogen wird. Dabei ist es vorteilhaft, das Verriegelungselement 16 bzw. die Federklammer 20 insbesondere kraftformschlüssig (rastend) gegen ungewolltes Lösen bzw. Herausnehmen aus der Schlitzöffnung 18 zu fixieren. In der eingesetzten Lage des Verriegelungselementes 16 sind die Verriegelungsschenkel 22 jeweils über eine sich konisch erweiternde Schrägfläche 28 des jeweiligen Anschlusssteckers 10 spreizbar, bis sie eine angrenzende Raststufe 30 des Anschlusssteckers 10 rastend hintergreifen. Hierzu wird insbesondere auf Fig. 4 und 6 hingewiesen, woraus sich auch ergibt, dass die Raststufe 30 bevorzugt durch eine Ringnut 32 gebildet ist, in die das Verriegelungselement 16 mit den Verriegelungsschenkeln 22/22a in der gesteckten Position eingreift. Der Stecker-Einführquerschnitt (Kreise 26) entspricht etwa dem größten Außendurchmesser der Raststufe 30 des Steckers 10, so dass die Verriegelungsschenkel 22 (22a) auch entsprechend sekantenartig in die Ringnut 32 eingreifen.

Wie sich weiter insbesondere aus Fig. 5 ergibt, ist die Federklammer 20 über je zwei konvex nach außen gebogene Anlageabschnitte 34 (siehe hierzu auch Fig. 7) einerseits auf der Seite des Verbindungsabschnittes 24 und andererseits an den freien Enden der Verriegelungsschenkel 22 innerhalb der Schlitzöffnung 18 jeweils zu beiden Seiten einer mittig zwischen den Verriegelungsschenkeln 22 verlaufenden Symmetrieachse 36 nach außen hin abgestützt. Weiterhin sind innerhalb der Schlitzöffnung 18 jeweils im symmetrisch zwischen den Aufnahmeöffnungen 6 liegenden Bereich Stützelemente 38 für die Verriegelungsschenkel 22 der Federklammer 20 vorgesehen, und zwar im inneren, einander zugewandten Bereich der Verriegelungsschenkel 22. Im Anlagebereich der Stützelemente 38 weisen die Verriegelungsschenkel 22 gemäß Fig. 5 und 7 jeweils einen leicht nach außen gebogenen Rastabschnitt 40 auf. Diese Rastabschnitte 40 bewirken gemeinsam mit den Stützelementen 38 eine rastende Fixierung der Federklammer 20 innerhalb der Schlitzöffnung 18 (siehe insbesondere Fig. 5).

Es ist vorteilhaft, das Verriegelungselement 16 so zu formen, dass in einem entspannten Zustand vor dem Einbringen in die Schlitzöffnung 18 (siehe Fig. 7) die Verriegelungsschenkel 22 in Richtung ihrer freien Enden leicht divergieren, so dass die Teilabschnitte 22a nicht parallel ausgerichtet sind. Erst im eingesetzten Zustand werden die Verriegelungsschenkel 22 so elastisch aufeinanderzu verformt, dass dann die geraden Teilabschnitte 22a idealerweise parallel zueinander angeordnet sind (vgl. Fig. 1 und 5).

Gemäß Fig. 5 ergibt sich durch die beschriebene, bevorzugte Ausgestaltung eine Symmetrie der Verriegelungsschenkel 22 einerseits bezüglich der Längs-Symmetrieachse 36, und andererseits sind die Verriegelungsschenkel 22 auch in jeweils zwei Abschnitte unterteilt, die symmetrisch zu einer von den Stützelementen 38 bzw. den Rastabschnitten 40 definierten Quer-Symmetrieachse 42 (siehe Fig. 7) ausgebildet sind. Dadurch werden etwa gleiche Rasteigenschaften im Bereich jeder Aufnahmeöffnung 6 erreicht. Die Verriegelungsschenkel 22 können jeweils über ihre ganze Länge hinweg zwischen den Anlageabschnitten 32 federelastisch nach außen biege-verformt werden, wobei sie sich mit den Rastabschnitten 40 von den Stützelementen 38 abheben. Durch die relativ große, zur federnden Verformung zur Verfügung stehende Länge wird eine vorteilhaft geringe Federkraft erreicht, die auch zu einer geringen Steckkraft beim Einstecken des jeweiligen Steckers 10 führt. Ausserdem wird die Federklammer 20 über die Anlageabschnitte 34 optimal symmetrisch zu den Aufnahmeöffnungen 6 positioniert.

In bevorzugter Ausgestaltung ist das Gehäuseteil 2 einstückig als Kunststoff-Spritzgussteil ausgebildet, und zwar insbesondere aus einem faserverstärkten Kunststoffmaterial. Vorzugsweise handelt es sich um ein Polyamid, wie PA 6.6 GF30. Alternativ kann das Gehäuseteil 2 aber auch aus Metall, vorzugsweise als Druckgussteil, ausgebildet sein. Vorzugsweise werden dabei die Aufnahmeöffnungen 6 mit den Dichtabschnitten (14) und bevorzugt auch mit den Halteabschnitten (20) unmittelbar formtechnisch gebildet, d. h. eingeformt. Es ist aber auch möglich, die Halteabschnitte bzw. die Schlitzöffnung 18 durch ein gesondertes, z. B. anzuklipsendes Formteil zu bilden.

Die Federklammer 20 besteht bei der bevorzugten Ausführung aus einem einstückigen gebogenen Federstahldraht insbesondere mit kreisförmigem Drahtquerschnitt.

Die Erfindung bezieht sich weiterhin auch auf die Ausgestaltung des Anschlusssteckers 10, der gemäß Fig. 4 und 6 aus einem die Umfangsdichtung 14 aufweisenden, zylindrischen oder leicht konischen Steckerschaft 44 und einem sich in axialer Richtung anschließenden Halteabschnitt 46 besteht. Der Steckerschaft 44 ist in den Dichtabschnitt, d. h. in die Innenfläche 12 der jeweiligen Aufnahmeöffnung 6 dichtend einsteckbar. Der Halteabschnitt 46 weist die mit dem Verriegelungselement 16 zusammenwirkende, vorzugsweise von einer radialen Flankenfläche der Ringnut 32 gebildete Raststufe 30 auf. Der Halteabschnitt 46 weist zudem die sich ausgehend von dem Steckerschaft 44 konisch erweiternde Schrägfläche 28 auf. Über die Schrägfläche 28 werden beim Steckvorgang die Verriegelungsschenkel 22 bzw. 22a der Federklammer 20 federelastisch gespreizt, die dann die Raststufe 30 rastend formschlüssig hintergreifen.

Jeder Anschlussstecker 10 ist gemäß Fig. 6 mit einer Druckmittelleitung 48 verbindbar, wozu sich gemäß Fig. 7 an den Halteabschnitt 46 ein Leitungsanschluss 50 insbesondere in Form eines Anschlussdorns zum Aufstecken der Leitung 48 anschließt.

Jeder Anschlussstecker 10 ist bevorzugt einstückig aus Metall, insbesondere Messing, oder aber aus Kunststoff hergestellt.

Im Übergang zwischen dem Leitungsanschluss 50 und dem Halteabschnitt 46 weist jeder Anschlussstecker 10 eine radiale Stirnringfläche 52 auf. In bevorzugter Ausgestaltung ist dabei eine Anpassung an den Bereich des Druckmittelanschlusses 4 des Gehäuseteils 2 derart vorgesehen, dass in der korrekt gesteckten und verriegelten Steckposition des Steckers 10 die Stirnringfläche 52 zumindest annähernd bündig in einer Ebene mit der angrenzenden Außenfläche 54 des Gehäuseteils 2 liegt (Fig. 6). Diese Ausgestaltung ermöglicht eine einfache visuelle und/oder haptische Einsteckkontrolle, ob der Stecker 10 auch wirklich korrekt bis in seine sicher verriegelte Position eingesteckt wurde.

Wie sich noch aus Fig. 3 ergibt, kann innerhalb jeder Aufnahmeöffnung 6 in Anpassung an die konische Schrägfläche 28 des Steckers 10 ein entsprechend konischer Übergangsabschnitt 56 gebildet sein.

Die Erfindung ist nicht auf die dargestellten und beschriebenen Ausführungsbeispiele beschränkt, sondern umfaßt auch alle im Sinne der Erfindung gleichwirkenden Ausführungen.

## Patentansprüche

1. Anschlussteil (1) für eine pneumatische oder hydraulische Aggregatkomponente, mit einem einen Druckmittelanschluss (4) aufweisenden Gehäuseteil (2), wobei der Druckmittelanschluss (4) aus mindestens zwei zum direkten Einstecken jeweils eines Anschlusssteckers (10) konzipierten, mit zueinander parallelen Öffnungsachsen (8) benachbart nebeneinander angeordneten Aufnahmeöffnungen (6) des Gehäuseteils (2) besteht, wobei jede Aufnahmeöffnung (6) einen Dichtabschnitt mit einer Innenfläche (12) zur Anlage einer Umfangsdichtung (14) für den Anschlussstecker (10) aufweist, und wobei den Aufnahmeöffnungen (6) als Verriegelungsmittel ein einzelnes, gemeinsames Mehrfach-Verriegelungselement (16) zum lösbaren Verriegeln jedes der eingesteckten Anschlussstecker (10) zugeordnet ist wobei das Mehrfach-Verriegelungselement (16) derart ausgebildet und gelagert ist, dass jeder Anschlussstecker (10) unabhängig von der Verriegelung eines gegebenenfalls zuvor gesteckten Anschlusssteckers (10) steckbar und verriegelbar ist,
**dadurch gekennzeichnet, dass** jede Aufnahmeöffnung (6) des Gehäuseteils (2) einen Halteabschnitt für die Verriegelungsmittel aufweist, wobei zum Lösen der Anschlussstecker (10) das Mehrfach-Verriegelungselement (16) im Bereich der Halteabschnitte der Aufnahmeöffnungen (6) radial zu den Öffnungsachsen (8) beweglich, und zwar verschiebbar oder demontierbar, angeordnet ist.

2. Anschlussteil nach Anspruch 1,
**dadurch gekennzeichnet, dass** das Mehrfach-Verriegelungselement (16) derart ausgebildet und gelagert ist, dass es im Bereich jeder Aufnahmeöffnung (6) im Wesentlichen gleiche Funktionseigenschaften besitzt.

3. Anschlussteil nach Anspruch 1 oder 2,
**dadurch gekennzeichnet, dass** die Halteabschnitte der Aufnahmeöffnungen (6) eine quer zu den Öffnungsachsen (3) ineinander übergehende Schlitzöffnung (18) bilden, in der als Verriegelungselement (16) eine einteilige, im Wesentlichen U-förmige Federklammer (20) lösbar eingeschoben angeordnet ist, wobei die Federklammer (20) zwei über einen Verbindungsabschnitt (24) verbundene, federelastische Verriegetungsschenkel (22) aufweist, die jeweils über eine sich erweiternde Schrägfläche (28) des jeweiligen Anschlusssteckers (10) spreizbar sind, bis sie eine sich anschließende Raststufe (30) des Anschlusssteckers (10) rastend hintergreifen

4. Anschlussteil nach einem der Ansprüche 1 bis 3,
**dadurch gekennzeichnet, dass** das Verriegelungselement (16) insbesondere kraftformschlüssig gegen ungewolltes Lösen fixiert ist.

5. Anschlussteil nach Anspruch 3 oder 4,
**dadurch gekennzeichnet, dass** innerhalb der Schlitzöffnung (18) jeweils im zwischen zwei Aufnahmeöffnungen (6) liegenden Bereich Stützelemente (38) für die Verriegelungsschenkel (22) der Federklammer (20) angeordnet sind.

6. Anschlussteil nach einem der Ansprüche 3 bis 5,
**dadurch gekennzeichnet, dass** die Federklammer (20) über je zwei Anlageabschnitte (34) einerseits auf der Seite des Verbindungsabschnittes (24) und andererseits an den freien Enden der Verriegelungsschenkel (22) in der Schlitzöffnung (18) abgestützt ist.

7. Anschlussteil nach einem der Ansprüche 3 bis 6,
**dadurch gekennzeichnet, dass** die Federklammer (20) mit Teilabschnitten (22a) der Verriegelungsschenkel (22) jeweils sekantenartig zu einem Stecker-Einführquerschnitt (26) jeder Aufnahmeöffnung (6) angeordnet ist.

8. Anschlussteil nach einem der Ansprüche 1 bis 7,
**dadurch gekennzeichnet, dass** das Gehäuseteil (2) als einstückiges Formteil aus Kunststoff, insbesondere als Spritzgussteil aus einem faserverstärkten Kunststoff, vorzugsweise Polyamid, wie PA 6.6 GF30, ausgebildet ist.

9. Anschlussteil nach einem der Ansprüche 1 bis 7,
**dadurch gekennzeichnet, dass** das Gehäuseteil (2) als einstückiges Formteil aus Metall, vorzugsweise als Druckgussteil, ausgebildet ist.

10. Anschlussteil nach einem der Ansprüche 3 bis 9,
**dadurch gekennzeichnet, dass** die Federklammer (20) aus einem gebogenen Federstahldraht besteht.

11. Anschlussteil nach einem der Ansprüche 1 bis 10,
**gekennzeichnet durch** Mittel zur insbesondere visuelle und/oder haptischen Einsteckkontrolle des/jedes Anschlusssteckers (10).

12. Anordnung mit einem Anschlussteil (1) nach einem der Ansprüche 1 bis 11 und mit mindestens einem Anschlussstecker (10),
**dadurch gekennzeichnet, dass** der Anschlussstecker (10) einen in den Dichtabschnitt der Aufnahmeöffnung (6) einsteckbaren und eine Umfangsdichtung (14) aufweisenden Steckerschaft (44) und einen sich anschließende, mit dem Verriegelungselement (16) zusammenwirkenden Halteabschnitt (46) aufweist.

13. Anordnung nach Anspruch 12.
**dadurch gekennzeichnet, dass** der Halteabschnitt (46) eine sich ausgehend von dem Steckerschaft (44) insbesondere konisch erweiternde Schrägfläche (28) und eine sich daran anschließende, bevorzugt als radiale Flankenfläche einer Ringnut (32) gebildete Raststufe (30) aufweist.

14. Anordnung nach Anspruch 12 oder 13,
**dadurch gekennzeichnet, dass** sich an den Halteabschnitt (46) ein Leitungsanschluss (50), insbesondere in Form eines Anschlussdoms zum Aufstecken einer Druckmittel-Leitung (48), anschließt.

15. Anordnung nach einem der Ansprüche 12 bis 14,
**gekennzeichnet durch** eine einstückige Ausbildung des Anschlusssteckers (10) aus Metall, insbesondere Messing, oder aus Kunststoff.

16. Anordnung nach einem der Ansprüche 12 bis 15,
**dadurch gekennzeichnet, dass** der Anschlussstecker (10) derart an das Anschlussteil (1) angepasst ist, dass zur Steckkontrolle eine leitungsseitige Stirnringfläche (52) in der eingesteckten und arretierten Steckposition im Wesentliche bündig in einer Ebene mit einer angrenzenden Außenfläche (54) des Gehäuseteils (2) liegt.

## Claims

1. A connecting part (1) for a pneumatic or hydraulic unit component, having a housing part (2) with a pressure medium connection (4), wherein the pressure medium connection (4) comprises at least two receiving openings (6) of the housing part (2) which are arranged adjacently side by side with opening axes (8) parallel to one another and are designed for direct insertion of a respective connecting plug (10), wherein each receiving opening (6) has a sealing portion with an inner surface (12) for contact of a circumferential seal (14) for the connecting plug (10), and wherein a single common multi-locking element (16) for releasable locking of each of the inserted connecting plugs (10) is associated with the receiving openings (6) as a locking means, wherein the multi-locking element (16) is constructed and mounted in such a manner that each connecting plug (10) is insertable and lockable independently of the locking of a connecting plug (10) optionally inserted beforehand, **characterised in that** each receiving opening (6) of the housing part (2) has a holding portion for the locking means, wherein for release of the connecting plugs (10), the multi-locking element (16) is, in the region of the holding portions of the receiving openings (6), arranged so as to be able to be moved radially to the opening axes (8), in fact so as to be able to be displaced or detached.

2. A connecting part according to claim 1, **characterised in that** the multi-locking element (16) is constructed and mounted in such a manner that it has substantially identical operational characteristics in the region of each receiving opening (6).

3. A connecting part according to claim 1 or 2, **characterised in that** the holding portions of the receiving openings (6) form a slot opening (18) merging transversely to the opening axes (8), in which as a locking element (16) there is a one-piece, substantially U-shaped spring clip (20) arranged inserted in a releasable manner, wherein the spring clip (20) has two resilient locking limbs (22) which are connected via a connecting portion (24) and which can each be forced apart via a widening inclined surface (28) of the respective connecting plug (10) until they engage in a locking manner behind an adjacent locking shoulder (30) of the connecting plug (10).

4. A connecting part according to any one of claims 1 to 3, **characterised in that** the locking element (16) is fixed against undesired release, in particular in a frictionally / positively locking manner.

5. A connecting part according to claim 3 or 4, **characterised in that** within the slot opening (18), supporting elements (38) for the locking limbs (22) of the spring clip (20) are in each case arranged in the region lying between two receiving openings (6).

6. A connecting part according to any one of claims 3 to 5, **characterised in that** the spring clip (20) is supported in the slot opening (18) via pairs of contact portions (34) located at the connecting-portion side on the one hand and at the free ends of the connecting limbs (22) on the other hand.

7. A connecting part according to any one of claims 3 to 6, **characterised in that** the spring clip (20) is, with partial portions (22a) of the locking limbs (22), in each case arranged secant-like with respect to a connector insertion cross-section (26) of each receiving opening (6).

8. A connecting part according to any one of claims 1 to 7, **characterised in that** the housing part (2) is in the form of a one-piece shaped part of plastics material, in particular an injection moulded part of a fibre-reinforced plastics material, preferably a polyamide such as PA 6.6 GF30.

9. A connecting part according to any one of claims 1 to 7, **characterised in that** the housing part (2) is in the form of a one-piece shaped part of metal, preferably a die cast part.

10. A connecting part according to any one of claims 3 to 9, **characterised in that** the spring clip (20) is composed of a bent spring steel wire.

11. A connecting part according to any one of claims 1 to 10, **characterised by** means for in particular visual and/or haptic checking of the insertion of the/each connecting plug (10).

12. An arrangement having a connecting part (1) according to any one of claims 1 to 11 and having at least one connecting plug (10), **characterised in that** the connecting plug (10) has a connector shank (44) which can be inserted into the sealing portion of the receiving opening (6) and which has a circumferential seal (14), and an adjoining holding portion (46) which cooperates with the locking element (16).

13. An arrangement according to claim 12, **characterised in that** the holding portion (46) has an inclined surface (28) which, issuing from the connector shank (44), widens in particular conically, and a locking shoulder (30) adjacent thereto which is preferably formed as a radial flank surface of an annular groove (32).

14. An arrangement according to claim 12 or 13, **characterised in that** a line connection (50), in particular in the form of a connecting spike for the attachment of a pressure medium line (48), adjoins the holding portion (46).

15. An arrangement according to any one of claims 12 to 14, **characterised by** a one-piece design of the connecting plug (10) of metal, in particular brass, or of a plastics material.

16. An arrangement according to any one of claims 12 to 15, **characterised in that** the connecting plug (10) is matched to the connecting part (1) in such a manner that, to check insertion, an end annular surface (52), at the side closest to the line, lies substantially flush in a plane with an adjacent outer surface (54) of the housing part (2) in the inserted and arrested insertion position.

## Revendications

1. Élément de raccordement (1) pour un composant d'un système pneumatique ou hydraulique, comportant un élément de boîtier (2) muni d'un raccord de fluide sous pression (4), ledit raccord de fluide sous pression (4) étant formé par au moins deux ouvertures de réception (6) du boîtier (2) disposées côte à côte avec des axes (8) parallèles entre eux et conçues chacune pour l'enfichage direct d'un raccord mâle (10), chaque ouverture de réception (6) comportant une partie étanche avec une face intérieure (12) contre laquelle prend appui un joint d'étanchéité périphérique (14) pour le raccord mâle (10), et un seul élément de verrouillage multiple (16) commun étant associé aux ouvertures de réception (6) en tant qu'organe de verrouillage pour le verrouillage amovible de chaque raccord mâle (10) enfiché, l'élément de verrouillage multiple (16) étant réalisé et logé de telle sorte que chaque raccord mâle (10) peut être enfiché et verrouillé indépendamment du verrouillage d'un raccord mâle (10) éventuellement enfiché au préalable,
**caractérisé en ce que** chaque ouverture de réception (6) du boîtier (2) comporte une partie de fixation pour les organes de verrouillage, l'élément de verrouillage multiple (16), en vue de la désolidarisation du raccord mâle (10), étant monté dans la zone des parties de fixation des ouvertures de réception (6) de manière mobile, à savoir de manière mobile en translation ou démontable, dans le sens radial par rapport aux axes (8) des ouvertures.

2. Élément de raccordement selon la revendication 1, **caractérisé en ce que** l'élément de verrouillage multiple (16) est réalisé et logé de telle sorte qu'il possède des propriétés fonctionnelles sensiblement identiques dans la zone de chaque ouverture de réception (6).

3. Élément de raccordement selon la revendication 1 ou 2, **caractérisé en ce que** les parties de fixation des ouvertures de réception (6) forment une ouverture en fente (18) se rejoignant transversalement aux axes (8) des ouvertures de réception (6), dans laquelle peut être insérée de manière amovible une agrafe flexible (20) d'une seule pièce sensiblement en forme de U, faisant fonction d'élément de verrouillage (16), ladite agrafe flexible (20) comportant deux branches de verrouillage (22) élastiquement flexibles, qui sont reliées par l'intermédiaire d'une partie de liaison (24) et qui peuvent être écartées chacune par une surface inclinée (28) s'élargissant du raccord mâle (10) concerné, jusqu'à ce qu'elles se positionnent derrière un décrochement de blocage (30) consécutif du raccord mâle (10) en l'enserrant de manière bloquée.

4. Élément de raccordement selon l'une quelconque des revendications 1 à 3, **caractérisé en ce que** l'élément de verrouillage (16) est fixé, en particulier par force, pour empêcher toute désolidarisation indésirable.

5. Élément de raccordement selon la revendication 3 ou 4, **caractérisé en ce que** des éléments de support (38) pour les branches de verrouillage (22) de l'agrafe flexible (20) sont disposés à l'intérieur de l'ouverture en fente (18), respectivement dans la zone située entre deux ouvertures de réception (6).

6. Élément de raccordement selon l'une quelconque des revendications 3 à 5, **caractérisé en ce que** l'agrafe flexible (20) prend appui dans l'ouverture en fente (18) par l'intermédiaire de deux zones d'appui (34), d'une part, sur le côté de la partie de liaison (24) et, d'autre part, sur les extrémités libres des branches de verrouillage (22).

7. Élément de raccordement selon l'une quelconque des revendications 3 à 6, **caractérisé en ce que** l'agrafe flexible (20) avec des tronçons partiels (22a) des branches de verrouillage (22) est disposée respectivement en forme de sécante par rapport à une section d'introduction (26) de chaque ouverture de réception (6).

8. Élément de raccordement selon l'une quelconque des revendications 1 à 7, **caractérisé en ce que** le boîtier (2) est réalisé sous la forme d'une pièce moulée d'un seul tenant en matière plastique, en particulier une pièce moulée par injection dans une matière plastique renforcée par des fibres, de préférence du polyamide, tel que le PA 6.6 GR30.

9. Élément de raccordement selon l'une quelconque des revendications 1 à 7, **caractérisé en ce que** le boîtier (2) est réalisé sous la forme d'une pièce moulée d'un seul tenant en métal, de préférence une pièce moulée sous pression.

10. Élément de raccordement selon l'une quelconque des revendications 3 à 9, **caractérisé en ce que** l'agrafe flexible (20) est réalisée dans un fil d'acier pour ressort cintré.

11. Élément de raccordement selon l'une quelconque des revendications 1 à 10, **caractérisé par** des moyens destinés à contrôler visuellement et/ou tactilement l'introduction du ou de chaque raccord mâle (10).

12. Système comportant un élément de raccordement (1) selon l'une quelconque des revendications 1 à 11, et comportant au moins un raccord mâle (10), **caractérisé en ce que** le raccord mâle (10) comporte une tige (44), destinée à être enfichée dans la partie étanche de l'ouverture de réception (6) et munie d'un joint périphérique (14), et une partie de fixation (46) située dans le prolongement de ladite tige et coopérant avec l'élément de verrouillage (16).

13. Système selon la revendication 12, **caractérisé en ce que** la partie de fixation (46) comporte une surface inclinée (28), partant de la tige (44) du raccord mâle et, en particulier, s'élargissant sous forme conique, et un décrochement de blocage (30), adjacent à ladite surface inclinée et réalisé de préférence sous forme de flanc radial d'une rainure annulaire (32).

14. Système selon la revendication 12 ou 13, **caractérisé en ce qu'**un raccord de conduite (50), en particulier sous la forme d'un mandrin pour le raccordement d'une conduite de fluide sous pression (48), est adjacent à la partie de fixation (46).

15. Système selon l'une quelconque des revendications 12 à 14, **caractérisé par** une configuration d'un seul tenant du raccord mâle (10) en métal, en particulier en laiton, ou en matière plastique.

16. Système selon l'une quelconque des revendications 12 à 15, **caractérisé en ce que** le raccord mâle (10) est ajusté à l'élément de raccordement (1) de telle sorte que, pour contrôler l'enfichage du raccord, une surface annulaire frontale (52), du côté de la conduite, est située, dans la position enfichée et bloquée, sensiblement à fleur dans un plan avec une face extérieure (54) adjacente du boîtier (2).
